(19) Europäisches Patentamt
European Patent Office
Office européen des brevets

(11) Veröffentlichungsnummer: **0 082 969**
**B1**

(12) # EUROPÄISCHE PATENTSCHRIFT

(45) Veröffentlichungstag der Patentschrift: **19.02.86**

(51) Int. Cl.[4]: **C 07 F 7/12**

(21) Anmeldenummer: **82111056.6**

(22) Anmeldetag: **30.11.82**

(54) **Verfahren zur Spaltung von Organosiloxanen.**

(30) Priorität: **28.12.81 DE 3151677**

(43) Veröffentlichungstag der Anmeldung: **06.07.83 Patentblatt 83/27**

(45) Bekanntmachung des Hinweises auf die Patenterteilung: **19.02.86 Patentblatt 86/8**

(84) Benannte Vertragsstaaten: **AT BE CH DE FR GB IT LI LU NL SE**

(56) Entgegenhaltungen:
**DE - A - 3 013 920**
**US - A - 2 615 034**

(73) Patentinhaber: **DYNAMIT NOBEL AKTIENGESELLSCHAFT, Postfach 1209, D-5210 Troisdorf, Bez. Köln (DE)**

(72) Erfinder: **Kötzsch, Hans-Joachim, Dr., Fecampring 28, D-7888 Rheinfelden (DE)**
Erfinder: **Vahlensieck, Hans-Joachim, Dr., Im Habiken 2, D-7867 Wehr (DE)**

EP 0 082 969 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Spaltung von Organosiloxanen mittels Chlorwasserstoff. Dabei entstehen Organochlorsilane, die wichtige Ausgangsprodukte für die Herstellung von Schutzgruppenreagentien sind, die z. B. bei der Herstellung synthetischer Penicilline eingesetzt werden. Weiterhin sind die Organochlorsilane Vorprodukte für die grossen Anwendungsgebiete der Organosiliciumester und der Silicone.

Organosiloxane fallen bei vielen Anwendungsgebieten häufig in verunreinigter Form an, in der ihre Aufarbeitung nicht oder nur unter erheblichem Aufwand möglich ist. So entsteht z. B. Hexamethyldisiloxan als Abfallprodukt in der Schutzgruppenchemie oder es ist neben anderen Siloxanen in verbrauchten Siliconölen enthalten, die beispielsweise als Wärmeträger oder Hydrauliköle eingesetzt waren. Für diese verbrauchten Siliconöle bestand bisher praktisch keine Verwendungsmöglichkeit, so dass sie in grösseren Mengen unschädlich gemacht oder vernichtet werden müssen.

Es ist bereits schon mehrfach durch Spaltung der Siloxane zu Chlorsilanen versucht worden, die wertvollen Organosiloxanabfälle wieder nutzbar zu machen. Andererseits sind z. B. die Methylchlorsilane grosstechnisch bisher nur über die Rochow-Synthese zugänglich gewesen und daher von diesen Synthese-Verfahren abhängig. Es sind als Spaltreagentien bereits Thionylchlorid, Aluminiumchlorid oder Phosphortrichlorid beschrieben worden. Nachteilig beim Einsatz dieser Verbindungen wirkt sich der dabei anfallende hohe Anteil an Nebenprodukten aus, deren Abtrennung einen zusätzlichen Aufwand mit sich bringt.

Es ist weiterhin auch bekannt, Siloxane mit Hilfe von Chlorwasserstoff zu spalten. Diese Versuche wurden aber in Gegenwart von wasserbindenden Zusätzen, wie konzentrierte Schwefelsäure oder $ZnCl_2$ durchgeführt, um die sonst unvollständig ablaufende Reaktion zu beeinflussen. Auch hierbei entstehen unerwünschte Nebenprodukte.

In der DE-OS 3013920 wird vorgeschlagen, die Spaltung von Hexaorganodisiloxan mit Chlorwasserstoff bei einem Chlorwasserstoff-Überdruck durchzuführen, um zu einer vollständigen Umsetzung zu Chlorsilanen zu gelangen, die sonst bei Raumtemperatur nicht erzielt werden kann. Diese Umsetzung wird bevorzugt bei $-15$ bis 20° C durchgeführt. Gemäss der dort beschriebenen Verfahrensweise erzielt man zwar eine hohe Ausbeute an den gewünschten Chlorsilanen, jedoch hat diese Arbeitsweise den Nachteil des hohen technischen Aufwands, der beim Arbeiten von Chlorwasserstoff unter Druck notwendig ist.

Es bestand deshalb die Aufgabe, die Spaltung von Organochlorsilanen mit Chlorwasserstoff so durchzuführen, dass bei dieser Umsetzung das gewünschte Organochlorsilan direkt in hohen Ausbeuten anfällt und der apparative Aufwand bei dieser Umsetzung möglichst gering ist.

Zur Lösung dieser Aufgabe wurde nun ein Verfahren zur Spaltung von flüssigen Organosiloxanen der Formel $(R_3Si)_2O$ oder mit $[-R_2SiO-]_x$-Einheiten, wobei R für gleiche oder ungleiche, gegebenenfalls durch Halogen oder Aryl substituierte, Alkyl- oder Alkylenreste mit 1 bis 18 C-Atomen oder für Arylreste steht und x ein beliebiger Polymerisationsgrad ist, gefunden, das dadurch gekennzeichnet ist, dass man den Chlorwasserstoff bei Temperaturen unterhalb 20° C ohne zusätzliche Anwendung eines Überdrucks mit dem Organosiloxan reagieren lässt, die bei der Reaktion entstehenden Chlorwasserstoffhydrate sich als flüssige Phase absetzen lässt und diese flüssige, mit Chlorwasserstoff gesättigte Phase aus dem System entfernt.

Die Reaktion wird im allgemeinen in der Weise durchgeführt, dass man das flüssige Organosiloxan mit dem Chlorwasserstoff bei der gewählten Reaktionstemperatur, die unterhalb 20° C liegt, sättigt. Während der sich dabei abspielenden Reaktion entstehen die an sich bekannten Chlorwasserstoffhydrate, die sich als schwere Phase absetzen. Ein Homogenrühren des Systems ist zu vermeiden.

Die bei der erfindungsgemässen Arbeitsweise entstehende flüssige untere Phase besteht überwiegend aus Gemischen des Di- und Trihydrats des Chlorwasserstoffs. Der Hydratgehalt hängt von der angewandten Sättigungstemperatur ab; bei 0° C liegen diese beiden Hydrate ungefähr im gleichen Gewichtsverhältnis vor.

In der organischen, leichteren Phase befinden sich die gewünschten Organochlorsilane, die gemäss folgenden Reaktionen entstanden sind:

1. $3(R_3Si)_2O + 7\,HCl \rightarrow 6R_3SiCl + HCl \cdot 3H_2O$
   und
2. $2[-R_2SiO-]_x + 5xHCl \rightarrow 2xR_2SiCl_2 + x\,HCl \cdot 2H_2O.$

Bei diesen Gleichungen ist jedoch die Temperaturabhängigkeit der Chlorwasserstoffhydratbildung zu berücksichtigen: Bei $-20$° C wird vorwiegend das Dihydrat abgeschieden; der Anteil an Trihydrat ist bei $-20$° C gering. Bei 0° C liegen beide Hydrate jeweils in etwa gleichen Anteilen vor, während bei 20° C der Anteil des Trihydrats weit überwiegt und der Anteil des Dihydrats nur gering ist.

Die erfindungsgemässe Umsetzung kann bei beliebigen Temperaturen unterhalb 20° C durchgeführt werden, sofern bei diesen Temperaturen sich die schwerere Phase im flüssigen Aggregatzustand befindet; dies bedeutet, dass man bis herab zu solchen Temperaturen arbeiten kann, bis der Gefrierpunkt der Chlorwasserstoffhydrate erreicht ist, der gegebenenfalls durch Vorliegen von eventuell anwesenden Gemischen, die eine Schmelzpunktsdepression verursachen können, noch erniedrigt wird. Es ist demzufolge möglich, in Einzelfällen bis herab zu Temperaturen von $-25$° C zu arbeiten. Besondern bevorzugt wird jedoch der Temperaturbereich zwischen $-10$° C und $+10$° C.

Wenn überwiegend Dialkyldichlorsilane entstehen, liegt der bevorzugte Temperaturbereich zwischen 0° C und −10° C, in Einzelfällen auch noch etwas tiefer, während beim alleinigen Auftreten von Trialkylchlorsilanen im erfindungsgemässen Spaltverfahren vorzugsweise bereits im Temperaturbereich zwischen 0° und +10° C gearbeitet werden kann.

Die erfindungsgemässe Reaktion lässt sich sowohl diskontinuierlich als auch kontinuierlich durchführen. In beiden Fällen geht man zweckmässigerweise anfangs so vor, dass man den Chlorwasserstoff in vorgelegtes Organosiloxan bei der gewünschten Reaktionstemperatur einleitet. Während des Einleitens bildet sich eine zweite flüssige Phase im Tempo der Spaltreaktion; diese zweite Phase fällt infolge ihres hohen spezifischen Gewichtes zu Boden und wird dort in kurzen Abständen entweder kontinuierlich oder diskontinuierlich abgelassen. Das Einleiten des Chlorwasserstoffs in das vorgelegte Organosiloxan erfolgt so lange, bis von dem Organosiloxan kein Chlorwasserstoff mehr aufgenommen wird und letzterer gasförmig aus dem Reaktionsgemisch austritt; gleichzeitig versiegt die spontane Bildung und Abscheidung der schwereren flüssigen Phase.

Bei einer diskontinuierlichen Arbeitsweise wird zu diesem Zeitpunkt die Chlorwasserstoffzuführung, die gegen Ende der Reaktion zur besseren Endpunktserkennung vorsichtshalber bereits verlangsamt wurde, unterbrochen und die untere Phase vollständig entleert. Die obere Phase besteht zu mehr als 99% aus dem gewünschten Chlorsilan.

Bei einer kontinuierlichen Ausgestaltung des erfindungsgemässen Verfahrens befindet sich im oberen Teil der Apparatur oberhalb des Füllstands des vorgelegten Organosiloxans ein Überlaufrohr für das gewünschte Organochlorsilan. Sobald aus diesem Überlauf das Organochlorsilan abläuft, wird mit der zusätzlichen Zuführung von Organosiloxan begonnen, das vorzugsweise über den unteren Reaktorteil hinzugeführt wird. Die Menge des zuzuführenden Organosiloxans soll dabei der Menge des überlaufenden Organochlorsilans entsprechen. Die Chlorwasserstoffmenge muss dann der einzuleitenden Menge an Organosiloxanen entsprechend den oben genannten Gleichungen angeglichen werden.

Die als Ausgangsprodukte einsetzbaren flüssigen Organosiloxane enthalten entweder Struktureinheiten der allgemeinen Formel $[-R_2SiO-]_x$ oder sie entsprechen der allgemeinen Formel $(R_3Si)_2O$. In diesen Formeln steht R für gleiche oder verschiedene Aryl-, Alkenyl- oder Alkylgruppen, wobei letztere gegebenenfalls durch Halogen oder Arylreste substituiert sein können und insgesamt 1 bis 18 C-Atome enthalten können. Der Index x ist ein Ausdruck für den Polymerisationsgrad in Polysiloxanen, der bekanntlich sehr unterschiedlich sein kann (beispielsweise von 2 bis etwa 2000); der Index x kann auch einen gebrochenen Wert annehmen, wenn z. B. ein Gemisch verschiedener Polysiloxane mit unterschiedlichen Polymerisationsgraden eingesetzt wird.

Als Beispiele von spaltbaren flüssigen Organosiloxanen seien genannt: Hexaalkyldisiloxane, wie Hexamethyldisiloxan und Hexaethyldisiloxan, Hexaphenyldisiloxan sowie die Dimethylpolysiloxane und die linearen Silicone sowie die linearen Anteile aus verzweigten oder cyclischen Siloxanen und Siliconen, auch wenn sie beispielsweise Vinyl-, Phenyl-, Trifluorpropyl-, Chlorpropyl-, Chlormethyl-, Phenylethyl- oder auch Ethyl- bis Octadecylgruppen enthalten.

Die einzusetzenden Siloxanverbindungen brauchen nicht als reine Verbindungen eingesetzt zu werden. Das erfindungsgemässe Verfahren verträgt unter Berücksichtigung der Reaktivität des Chlorwasserstoffes durchaus grössere Konzentrationen an verunreinigenden Stoffen, wie beispielsweise Gehalte an Chlorkohlenwasserstoffen oder Kohlenwasserstoffen in den Siloxanen. Diese Tatsache ermöglicht die sehr willkommene, im vorliegenden Fall komplikationslose Aufarbeitung z. B. von Siloxan-Abfällen in einfacher Weise.

Beispiel 1

Ein vertikal stehendes, etwa 1,5 l fassendes Doppelmantelrohr von 50 mm Innendurchmesser und 800 mm Höhe, ausgerüstet mit einem ebenfalls mit Doppelmantel versehenen Bodenablasshahn, Atemleitung, Innenthermometer und Gaseinleitungsrohr am unteren Ende, wurde mit 900 g nicht mehr brauchbarem Polydimethylsiliconöl gefüllt. Dieses diente vorher als Wärmeträgerflüssigkeit bei einer Temperatur von etwa 200° C und war mit etwa 6% Kerosin verunreinigt.

Das System wurde auf −10° C heruntergekühlt und dann drei Stunden lang mit 320 g/h gasförmigen HCl beschickt unter Einhaltung der Reaktionstemperatur von −10° C und unter portionsweiser Abtrennung der sich währenddessen abscheidenen spezifisch schwereren flüssigen Phasen in Intervallen von ca. 20 Minuten durch den Bodenablasshahn.

Nach Ablauf der drei Stunden wurde die Geschwindigkeit der Chlorwasserstoffzuführung auf 130 g/h gedrosselt und der Ansatz bei dieser Geschwindigkeit unter weiterhin gleichen Reaktionsbedingungen so lange weitergefahren, bis der Chlorwasserstoff infolge Sättigung nicht mehr absorbiert wurde, sondern begann, in die Atemleitung auszuströmen. Dies war nach etwa weiteren 30 Minuten der Fall, woraufhin die HCl-Zufuhr eingestellt wurde. Die Füllung des Reaktors hatte sich während der Reaktion auf ca. 1,5 l ausgedehnt.

Der Ansatz wurde etwa 1 Stunde bei 0° C stehengelassen, und daraufhin wurden die letzten Tropfen der unteren Phase abgetrennt und die obere Phase bei Normaldruck über eine kurze Kolonne destilliert. Beim Kochpunkt von 70° C destillierten nach wenigen Gramm Vorlauf insgesamt 1412 g (ca. 95%, bezogen auf etwa 840 g eingesetztes Polydimethylsiloxan) reines Dimethyldichlorsilan.

Die während der Reaktion abgetrennte spezifisch schwerere Phase von insgesamt 388 g enthielt 47,3% HCl und bestand demnach zu ca. 70%

aus $HCl \cdot 2H_2O$ und nur zu ca. 30% aus $HCl \cdot 3H_2O$. Insgesamt waren ca. 1050 g gasförmiges HCl eingesetzt worden.

Beispiel 2

Analog Beispiel 1 wurde der dort genannte Reaktor mit 1156 g (5 Mol) 1,2-Dichlormethyltetramethyldisiloxan beschickt und bei +10° C 2 Stunden lang mit 190 g/h HCl, dann 30 Minuten lang mit 100 g/h HCl gesättigt, während in Abständen von ca. 20 Minuten insgesamt ca. 160 g untere Phase (HCl-Konzentration 43,2% entsprechend 32% $HCl \cdot 2H_2O$ und 68% $HCl \cdot 3H_2O$) abgetrennt wurde. Der Füllungsgrad des Reaktors stieg dabei aufgrund der während des Reaktionsablaufs stattfindenden Volumenausdehnung von ca. 70% auf ca. 90% an. Die gaschromatographische Analyse der oberen Phase zeigte ca. 98% Chlormethyldimethylchlorsilan an. Es wurden destillativ insgesamt 1389 g dieses Produkts isoliert.

Beispiel 3

Ein vertikal stehender, ca. 5 l fassender zylindrischer Doppelmantelreaktor von 80 mm Durchmesser und 1000 mm Höhe mit Innenthermometer wurde am oberen Ende mit einer Atemleitung und einem Überlaufrohr versehen; am unteren Ende war ein temperierbarer Bodenablasshahn und ein dahinter liegendes Feindosierventil angebracht, das mit Hilfe eines kapazitiv messenden Fühlers den Abfluss der unteren Phase steuert. Ein Gaseinleitungsrohr für Chlorwasserstoff und ein Zuführungsrohr für Siloxan mündeten etwa 200 mm oberhalb des Bodens in das Rohr ein.

Der Reaktor wurde mit 3,4 kg Hexamethyldisiloxan beschickt, auf 0° C Innentemperatur eingestellt und durch Einleiten von 620 g HCl/h und Abscheidung von 230 g unterer Phase pro Stunde in Betrieb gesetzt. Nach ca. 3 Stunden wurde bei vollständig gefülltem Reaktor unter Beibehaltung von 0° C Reaktionstemperatur und der gleichen Einleitungsrate des Chlorwasserstoffs der kontinuierliche Betrieb durch Zuführung von 1140 g Hexamethyldisiloxan pro Stunde aufgenommen. Die stündliche Abscheidungsrate von 230 g unterer Phase wurde beibehalten. Aus dem Ober- und Überlauf traten von dann an stündlich ca. 1500 g der oberen Phase aus.

Die obere Phase bestand durchschnittlich zu 96 bis 98% aus Trimethylchlorsilan und einem kleinen Rest Hexamethyldisiloxan. Die untere Phase bestand aus einem Gemisch aus etwa gleichen Anteilen von Chlorwasserstoffdihydrat und -trihydrat mit einem durchschnittlichen HCl-Gehalt von 45,2%.

Über einen Betriebszeitraum von 82 Stunden wurden insgesamt 93,1 kg Hexamethyldisiloxan und 50,8 kg Chlorwasserstoff verarbeitet und daraus 120,5 kg Trimethylchlorsilan (96,8% Ausbeute) hergestellt; 2,8 kg Hexamethyldisiloxan wurden zurückerhalten. Als Nebenprodukt fielen 18,8 kg 45,2%ige HCl-Hydrate an.

Beispiel 4

Analog Beispiel 1 wurden 821 g (2 Mol) eines überwiegend aus 1,1,3,3-Tetraphenyl-1,3-dimethyldisiloxan bestehenden Diffusionspumpenöls bei −10° C innerhalb 1 Stunde mit Chlorwasserstoff gesättigt, wofür etwa 170 g HCl notwendig waren. Währenddessen wurden ca. 70 g untere Phase in mehreren Portionen abgetrennt (HCl-Gehalt ca. 47%). Die anschliessende Destillation der oberen Phase lieferte beim Kochpunkt 128 bis 131° C (1 mbar) 902 g Methyldiphenylchlorsilan, entsprechend einer Produktausbeute von etwa 97%.

**Patentansprüche**

1. Verfahren zur Spaltung von flüssigen Organosiloxanen der Formel $(R_3Si)_2O$ oder mit $[-R_2SiO-]_x$-Einheiten, wobei R für gleiche oder ungleiche, gegebenenfalls durch Halogen oder Aryl substituierte Alkyl- oder Alkenylreste mit 1 bis 18 C-Atomen, oder für Arylreste steht und x ein beliebiger Polymerisationsgrad ist, mittels Chlorwasserstoff unter Bildung von Organochlorsilanen, dadurch gekennzeichnet, dass man den Chlorwasserstoff bei Temperaturen unterhalb 20° C ohne zusätzliche Anwendung eines Überdrucks mit dem Organsiloxan reagieren lässt, die bei der Reaktion entstehenden Chlorwasserstoffhydrate sich als flüssige Phase absetzen lässt und diese flüssige, mit Chlorwasserstoff gesättigte Phase aus dem System entfernt.

2. Verfahren gemäss Anspruch 1, dadurch gekennzeichnet, dass man die Spaltung bei Temperaturen zwischen −10° C und +10° C durchführt.

3. Verfahren gemäss Ansprüchen 1 oder 2, dadurch gekennzeichnet, dass man den Chlorwasserstoff in das Organosiloxan bis zum Erhalt einer gesättigten Lösung einleitet.

4. Verfahren gemäss einem der Ansprüche 1 bis 3, dadurch gekennzeichnet, dass man die Chlorwasserstoffhydratphase kontinuierlich abtrennt und gleichzeitig entsprechende Mengen Chlorwasserstoff und Organosiloxan dem System kontinuierlich hinzufügt.

**Claims**

1. Process for the cleavage of liquid organosiloxanes of the formula $(R_3Si)_2O$ or with $[-R_2SiO-]_x$ units, wherein R stands for the same or different alkyl or alkenyl residues with 1 to 18 C-atoms optionally substituted by halogen or aryl, or for aryl residues, and x is any degree of polymerisation, by means of hydrogen chloride with formation of organochlorosilanes, characterised in that the hydrogen chloride is reacted with the organosiloxane at temperatures below 20° C without additional use of an excess pressure, the hydrogen chloride hydrate being produced in the reaction is deposited as liquid phase and this liquid phase saturated with hydrogen chloride is removed from the system.

2. Process according to claim 1, characterised in that the cleavage is carried out at temperatures between −10° C and +10° C.

3. Process according to claims 1 or 2, characterised in that the hydrogen chloride is supplied to the organosiloxane up to the content for a saturated solution.

4. Process according to one of claims 1 to 3, characterized in that the hydrogen chloride hydrate phase is continuously separated off and at the same time corresponding amounts of hydrogen chloride and organosiloxane are continuously added to the system.

**Revendications**

1. Procédé de scission d'organosiloxanes liquides de formule $(R_3Si)_2O$ ou avec des motifs $[-R_2SiO-]_x$, R représentant des restes alkyles ou alcényles avec 1 à 18 atomes de C, identiques ou différents, éventuellement substitués par un halogène ou un aryle ou des restes aryles et x étant un degré de polymérisation quelconque, à l'aide de gaz chlorhydrique avec formation d'organochlorosilanes, caractérisé en ce qu'on laisse réagir le gaz chlorhydrique avec l'organosiloxane à des températures au-dessous de 20° C sans intervention supplémentaire de surpression, qu'on laisse se déposer sous forme de phase liquide les hydrates d'acide chlorhydrique formés au cours de la réaction et qu'on élimine du système cette phase liquide saturée de gaz chlorhydrique.

2. Procédé selon la revendication 1, caractérisé en ce qu'on réalise la scission à des températures comprises entre −10° C et +10° C.

3. Procédé selon la revendication 1 ou 2, caractérisé en ce qu'on introduit le gaz chlorhydrique dans l'organosiloxane jusqu'à obtention d'une solution saturée.

4. Procédé selon l'une des revendications 1 à 3, caractérisé en ce qu'on sépare de façon continue la phase d'hydrate d'acide chlorhydrique et introduit en même temps en continu dans le système les quantités correspondantes de gaz chlorhydrique et d'organosiloxane.